# DEMANDE DE BREVET EUROPEEN

(11) **EP 1 376 312 A1**
(43) Date de publication de la demande: **02.01.2004**
(21) Numéro de dépôt: 03291400.4
(22) Date de dépôt: 12.06.2003
(51) Int. Cl.: G06F 1/16, H04M 1/725

(54) **Dispositif comprenant un appareil électronique portable et un appareil d'entrée de données**

(30) Priorité: 20.06.2002 FR 0207644
(71) Demandeur: Inventel Systemes, 75005 Paris (FR)
(72) Inventeur: Beguet, Bruno, 77870 Vulaine-sur-Seine (FR); Amberny, Olivier, 92160 Antony (FR); Royer de la Bastie, Sébastien, 75007 Paris (FR); Carreel, Eric, 91190 Meudon (FR)
(74) Mandataire: Burbaud, Eric

(57) **Abrégé**

Dispositif comprenant un appareil électronique portable (2) et un appareil d'entrée de données (3) qui est adapté pour communiquer des informations à l'appareil électronique portable par l'intermédiaire de l'interface de recharge (10) des batteries de l'appareil électronique portable.

## Description

La présente invention est relative aux dispositifs comprenant un appareil électronique portable et un appareil d'entrée de données qui est adapté pour communiquer des informations audit appareil électronique portable.

Le document US-A-6 108 200 décrit un exemple d'un tel dispositif, dans lequel l'appareil électronique portable est un assistant personnel numérique ("PDA") doté d'une interface de communication spéciale qui peut se connecter sur une interface complémentaire d'un clavier.

Cette solution est toutefois coûteuse, dans la mesure où elle implique de doter l'appareil électronique portable d'une interface de communication supplémentaire. Ce surcoût est gênant quel que soit l'appareil électronique portable considéré, et il peut même devenir prohibitif lorsque l'appareil électronique portable est un appareil commercialisé avec une très faible marge bénéficiaire, comme c'est le cas pour les radiotéléphones pour réseaux de radiocommunication privés (par exemple de type DECT, BLUETOOTH ou autre).

La présente invention a notamment pour but de pallier ces inconvénients.

A cet effet, selon l'invention, un dispositif du genre en question est caractérisé en ce que l'appareil électronique portable comprend une unité centrale électronique, une batterie électrique rechargeable, une interface de recharge adaptée pour se connecter (par contact galvanique, par induction ou autre) à une source d'énergie externe pour recharger la batterie, et un circuit détecteur relié à l'unité centrale et adapté pour détecter la présence de ladite source d'énergie électrique connectée à l'interface de recharge,
en ce que l'appareil d'entrée de données comporte une interface de sortie adaptée pour se connecter (par contact galvanique, par induction ou autre) à l'interface de recharge de l'appareil électrique portable, et un dispositif générateur de signaux codés adapté pour générer des signaux électriques codés représentatifs d'informations et pour transmettre ces signaux électriques codés à l'interface de sortie, lesquels signaux électriques codés sont reçus par l'interface de recharge de l'appareil électronique portable lorsque ladite interface de recharge est connectée à l'interface de sortie de l'appareil d'entrée de données,
en ce que le circuit détecteur de l'appareil électronique portable est adapté pour capter lesdits signaux électriques codés,
et en ce que l'unité centrale de l'appareil électronique portable et adaptée pour décoder les signaux électriques codés captés par le circuit détecteur et recevoir ainsi les informations représentées par ces signaux électriques codés.

Grâce à ces dispositions, on peut faire communiquer l'appareil électronique portable avec l'appareil d'entrée de données en tirant partie de l'interface de recharge qui doit de toutes façons être présente. Cette communication est donc obtenue pour un très faible surcoût au niveau de l'appareil électronique portable, et pour un relativement faible coût global, notamment lorsqu'on utilise un appareil d'entrée de données peu coûteux tel qu'un clavier ou similaire.

Dans des modes de réalisation préférés de l'invention, on peut éventuellement avoir recours en outre à l'une et/ou à l'autre des dispositions suivantes :
- le dispositif électronique portable est un radiotéléphone ;
- l'appareil d'entrée de données comprend une interface permettant de recevoir lesdites informations d'un utilisateur, cette interface étant reliée au dispositif générateur de signaux codés ;
- l'interface comprend un clavier ;
- les signaux électriques codés générés par le dispositif générateur de signaux codés sont modulés sur deux niveaux, le circuit détecteur de l'appareil électronique portable étant adapté pour différencier ces deux niveaux ;
- les signaux électriques codés générés par le dispositif générateur de signaux codés IC sont des signaux obtenus par modulation en amplitude d'une porteuse périodique ;
- la porteuse périodique a une fréquence supérieure à 1000 Hz ;
- l'appareil d'entrée de données est alimenté électriquement par la batterie rechargeable de l'appareil électronique portable, par l'intermédiaire de l'interface de sortie dudit appareil d'entrée de données lorsque ladite interface de sortie est connecté à l'interface de recharge de l'appareil électronique portable ;
- l'interface de recharge de l'appareil électronique portable est reliée à la batterie électrique rechargeable par l'intermédiaire d'un dispositif électronique unidirectionnel autorisant uniquement un passage de courant dans un sens permettant de recharger la batterie, ce dispositif électronique unidirectionnel étant monté en parallèle avec au moins une résistance de fuite adaptée pour permettre à la batterie d'alimenter l'appareil d'entrée de données ;
- l'appareil électronique portable comprend un écran commandé par l'unité centrale dudit appareil électronique portable, l'unité centrale étant adaptée pour faire afficher à l'écran au moins une partie des informations communiquées à l'appareil électronique portable par l'appareil d'entrée de données ;
- l'appareil d'entrée de données comprend un support permettant de porter l'appareil électronique portable dans une position adaptée pour qu'un utilisateur se servant de l'appareil d'entrée de données puisse lire l'écran de l'appareil électronique portable ;
- l'appareil électronique portable comprend un clavier simplifié et le support de l'appareil d'entrée de données comprend au moins une paroi adaptée pour masquer au moins partiellement le clavier de l'appareil électronique portable lorsque ledit appareil électronique portable est engagé sur le support ;
- le support de l'appareil d'entrée de données comprend un logement dans lequel s'insère l'appareil électronique portable, ledit appareil électronique portable étant un radiotéléphone comprenant un microphone qui se trouve dans ledit logement lorsque l'appareil électronique portable est inséré dans ledit logement, ledit microphone se trouvant alors en correspondance avec une ouverture ménagée dans ledit support et adaptée pour permettre audit microphone de recevoir des ondes sonores émises par un utilisateur.

D'autres caractéristiques et avantages de l'invention apparaîtront au cours de la description suivante d'une de ses formes de réalisation, donnée à titre d'exemple non limitatif, en regard des dessins joints.

Sur les dessins :
- les figures 1 et 2 sont des vues en perspective d'un dispositif selon une forme de réalisation de l'invention, comprenant un radiotéléphone portable et un appareil d'entrée de données adapté pour se connecter à ce téléphone, le radiotéléphone étant séparé de l'appareil d'entrée de données sur la figure 1 et connecté audit appareil d'entrée de données sur la figure 2,
- la figure 3 est un schéma bloc représentant le circuit électronique de l'appareil d'entrée de données des figures 1 et 2,
- et la figure 4 est un schéma bloc représentant une partie du circuit électronique du radiotéléphone des figures 1 et 2.

Sur les différentes figures, les mêmes références désignent des éléments identiques ou similaires.

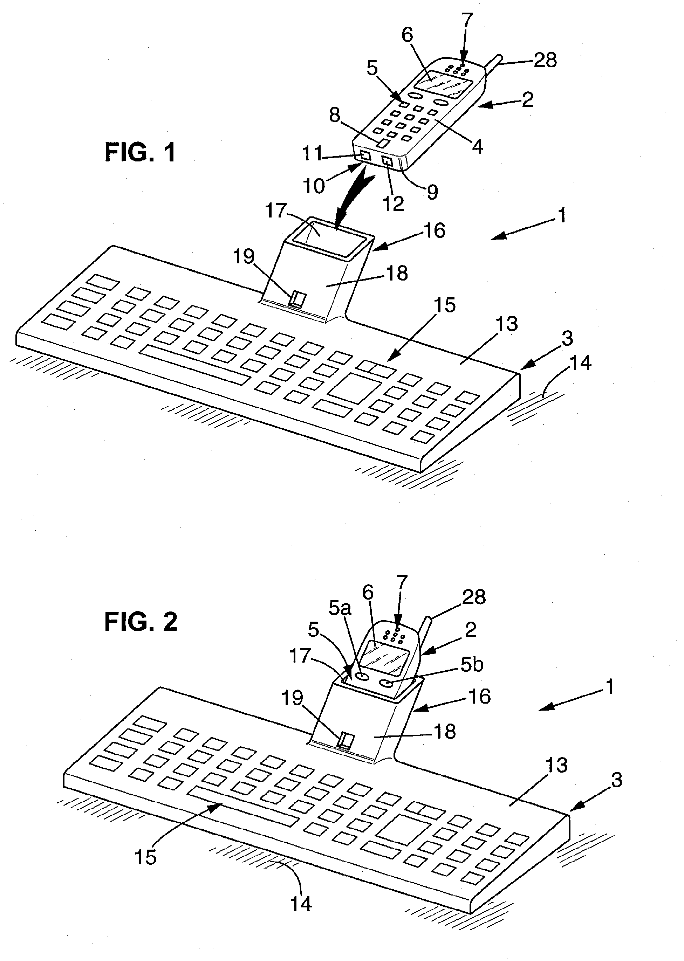

Comme représenté sur les figures 1 et 2, l'invention concerne un dispositif 1 comprenant d'une part, un appareil électronique portable 2 et d'autre part un appareil d'entrée de données 3 sur lequel peut être connecté le radiotéléphone 2 pour recevoir des informations (par exemple entrées par un utilisateur, ou encore provenant d'un autre dispositif).

Dans l'exemple représenté sur les dessins, l'appareil électronique portable 2 est constitué par un radiotéléphone portable fonctionnant par exemple selon un protocole de communication pour réseau de radiocommunication privé, par exemple, le protocole DECT ou le protocole BLUETOOTH.

Toutefois, l'appareil électronique portable 2 pourrait être constitué par tout autre appareil, par exemple un radiotéléphone fonctionnant selon un protocole de radiocommunication pour réseau public (par exemple, le protocole GSM, le protocole UMTS, ou autre), un assistant numérique personnel ("PDA"), ou autre.

Dans l'exemple considéré ici, l'appareil électronique portable 2, constitué en l'occurrence par un radiotéléphone comme indiqué ci-dessus, se présente sous la forme d'un boîtier portatif tenant dans la main d'un utilisateur, avec une face avant 4 dotée d'un clavier simplifié 5, d'un écran 6, d'un haut-parleur 7 et d'un microphone 8 disposé vers l'extrémité inférieure du boîtier.

De plus, la face inférieure 9 du boîtier comporte une interface de recharge 10 qui, dans l'exemple représenté, comprend deux bornes 11, 12 permettant de recharger la batterie interne du radiotéléphone 2 lorsqu'il repose sur un socle de chargement (non représenté) relié à une source d'énergie extérieure, lequel socle de chargement constitue le plus souvent une base fixe de radiocommunication reliée à un réseau de communication publique et adaptée pour communiquer avec le radiotéléphone 2 par voie hertzienne.

Par ailleurs, dans l'exemple représenté, l'appareil d'entrée de données 3 se présente sous la forme d'une tablette 13 pouvant être posée sur une surface fixe 14, telle que la surface supérieure d'une table ou similaire. Cette tablette 13 comporte sur sa face supérieure une interface homme-machine 15 adaptée pour permettre à un utilisateur d'entrer des informations pour qu'elles soient communiquées au téléphone sans fil 2 lorsqu'il est connecté à l'appareil d'entrée de données 3.

Dans l'exemple représenté sur les figures 1 et 2, l'interface 15 est constituée par un clavier, mais ce clavier pourrait être remplacé par ou associé à une autre interface homme-machine telle qu'un écran tactile, une surface tactile de reconnaissance de l'écriture, ou autre.

Le dispositif d'entrée de données 3 forme avantageusement un support 16 adapté pour porter le radiotéléphone 2 en le faisant communiquer avec l'appareil d'entrée de données 3, comme il sera expliqué ci-après. Avantageusement, comme on peut le voir sur la figure 2, le support 16 est adapté pour porter le radiotéléphone 2 dans une position relevée permettant à un utilisateur qui se sert du clavier 15 de visualiser aisément l'écran 6 du radiotéléphone : lorsque l'utilisateur entre des informations sur le clavier 15, on peut ainsi faire afficher au moins une partie de ces informations sur l'écran 6 du radiotéléphone, ce qui permet à l'utilisateur de vérifier les informations entrées et le cas échéant de les corriger.

Avantageusement, le support 16 peut se présenter sous la forme d'un socle relevé délimitant un logement intérieur 17 en forme de puits dans lequel peut s'engager la partie inférieure du radiotéléphone. Lorsque le radiotéléphone 2 est engagé dans le logement 17, la paroi frontale 18 qui délimite ce logement peut avantageusement recouvrir au moins une partie du clavier 5 du radiotéléphone, de façon à neutraliser ce clavier et à obliger l'utilisateur à utiliser le clavier 15 de l'appareil d'entrée de données 3.

Eventuellement, la paroi frontale 18 peut laisser apparentes quelques touches, 5a, 5b du clavier 5, par exemple les touches permettant de lancer un appel ou de le couper.

De plus, la paroi frontale 18 du support 16 peut avantageusement comprendre une ouverture 19 ménagée en correspondance avec la position occupée par le microphone 8 du radiotéléphone 2 lorsque ledit radiotéléphone est inséré dans le logement 17, ce qui permet audit microphone 8 de recevoir des ondes sonores émises par un utilisateur. Ainsi, il est possible d'utiliser le radiotéléphone 2 pour une communication téléphonique pendant qu'il est porté par le support 16.

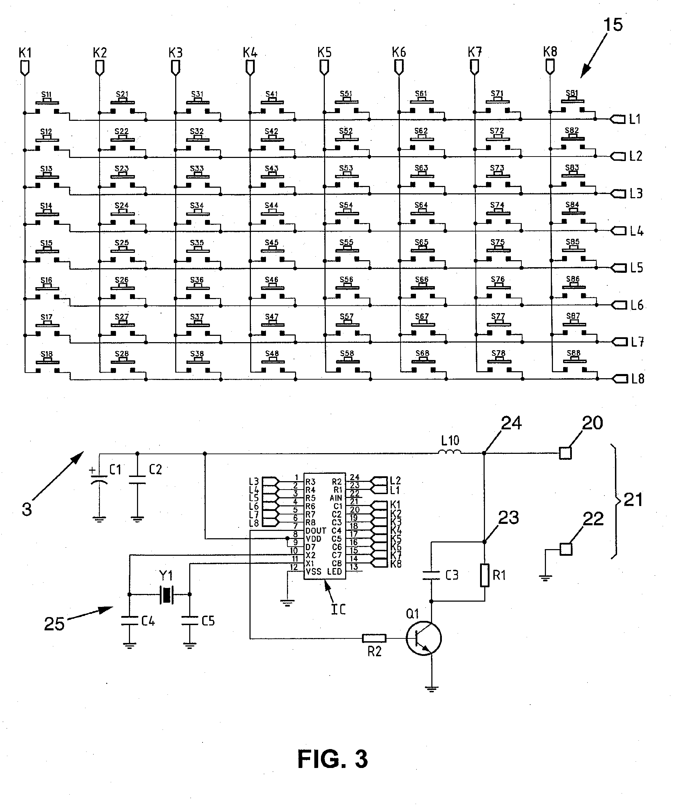

Comme représenté sur la figure 3, le circuit électronique interne de l'appareil d'entrée de données 3 peut comprendre un microcontrôleur IC qui peut être constitué par exemple par un circuit encodeur commercialisé sous la référence HT6222 par la société HOLTEK SEMICONDUCTOR INC., 3 Création Road, II, Science-Based Industrial Park, HSINCHU, Taiwan. Les microcontrôleurs de ce type, qui sont également utilisés par exemple pour commander des diodes électroluminescentes infrarouges de télécommande, présentent l'avantage d'être particulièrement peu coûteux.

Le microcontrôleur IC comporte des entrées K1-K8, reliées chacune à une colonne de touches S11-S18, S21-S28, S31-S38, S41-S48, S51-S58, S61-S68, S71-S78 et S81-S88 appartenant au clavier 15. De plus, le microcontrôleur comporte également des entrées L1-L8, reliées respectivement aux différentes lignes de touches constituant le clavier 15, savoir S11-S81, S12-S82, S13-S83, S14-S84, S15-S85, S16-S86, S17-S87, et S18-S88.

Lorsqu'un utilisateur appuie sur l'une des touches S11-S88, le microcontrôleur IC peut donc repérer l'entrée de colonne Ki et l'entrée de lignes Lj qui sont mises en court-circuit par cette touche, et le microcontrôleur IC génère alors sur sa sortie DOUT un signal codé représentatif de la touche qui vient d'être actionnée.

Dans l'exemple considéré ici, ce signal codé est superposé à une porteuse constituée par un signal périodique tel qu'un signal d'horloge en créneaux émis de préférence à une fréquence supérieure à 1kHz et avantageusement supérieure à 10 kHz, par exemple à la fréquence de 38 kHz.

A chaque appui sur une touche du clavier, le signal émis par le microcontrôleur IC peut être codé sur un nombre n de bits, par exemple 8 bits. A titre d'exemple non limitatif, dans le cas particulier considéré ici, un bit égal à 0 ou peut être constitué par un signal haut sur une durée de 0,56 ms (millisecondes) (autrement dit, on laisse passer la porteuse à 38 kHz pendant 0,56 ms) suivi d'un signal nul pendant 0,56 ms. Toujours dans cet exemple, un bit égal 1 peut être représenté par un signal haut de 0,56 ms (comme pour un bit égal à 0), suivi cette fois-ci par un signal égal à 0 pendant 1,68 ms.

Le signal de la sortie DOUT est donc codé sur deux niveaux, par une modulation classique en bande de base dite "OOK" ("On Off Keying").

On notera que, le cas échéant, le signal pourrait être codé sur plus de deux niveaux, notamment en associant une modulation en amplitude et une modulation en phase.

La sortie DOUT du microcontrôleur IC est reliée, par l'intermédiaire d'une résistance R2, à la base d'un transistor NPN Q1 dont l'émetteur est relié à la masse et dont le collecteur est relié, par l'intermédiaire d'une résistance R1 en parallèle avec un condensateur C3 ayant par exemple une valeur de l'ordre de 1nF, à l'une des bornes 20 d'une interface de sortie 21. Dans l'exemple considéré, cette interface de sortie 21 comprend deux bornes 20, 22 qui sont disposées dans le fond du logement 17 et qui sont adaptées pour venir en contact respectivement avec les bornes 11,12 de l'interface de recharge 10 du radiotéléphone 2 lorsque ledit radiotéléphone est inséré dans le puits 17.

Dans l'exemple considéré, la borne 20 de l'interface de sortie 21 est normalement portée à un potentiel positif d'environ 2,4 V par la borne 11 du radiotéléphone 2, comme il sera expliqué ci-après, lorsque ledit radiotéléphone est inséré dans le logement 17, tandis que la borne 22 est reliée à la masse.

Ainsi, à chaque impulsion émise par la sortie DOUT du microcontrôleur IC (à la fréquence de 38 kHz) pendant que ladite sortie émet un signal haut, le transistor Q1 devient passant et abaisse le potentiel de la borne 20 à 0 (à cette fréquence, le condensateur C3 se comporte comme un court-circuit).

En revanche, pendant les périodes où la borne DOUT du microcontrôleur émet un signal bas, ou entre deux impulsions émises par la sortie DOUT lorsqu'elle émet un signal haut, le transistor Q1 est dans son état non passant et la borne 20 reste à son potentiel haut.

Avantageusement, le microcontrôleur IC est alimenté électriquement par l'intermédiaire de la borne 20 lorsque le radiotéléphone 2 est inséré dans le logement 17.

A cet effet, la borne 20 est reliée à l'entrée d'alimentation VDD du microcontrôleur IC, de préférence par l'intermédiaire d'une inductance L10 d'une valeur par exemple de l'ordre de 100 µH, laquelle inductance L10 est de préférence reliée en dérivation à un noeud 24 situé entre la borne 20 et un noeud 23 relié à la fois à la résistance R1 et au condensateur C3. L'inductance L10 permet de filtrer les signaux codés constitués par la succession de potentiels haut et bas au niveau de la borne 20, de façon que ces variations de potentiel n'influencent pas sensiblement l'entrée d'alimentation VDD du microcontrôleur.

De plus, un ou plusieurs condensateurs C1, C2 peuvent avantageusement être connectés en dérivation sur la ligne conductrice qui relie le noeud 24 susmentionné à l'entrée d'alimentation VDD du microcontrôleur, pour servir de réserve d'énergie électrique. Dans l'exemple considéré ici, ces condensateurs sont au nombre de deux et peuvent avoir des valeurs par exemple respectivement de l'ordre de 1000 µF et 100 nF.

Un circuit oscillateur 25 (comprenant par exemple deux condensateurs C4, C5 et un résonateur à céramique Y1) peut par ailleurs être relié à deux entrées X1,X2 du microcontrôleur IC de façon à générer un signal périodique qui permet de générer la porteuse à 38 kHz.

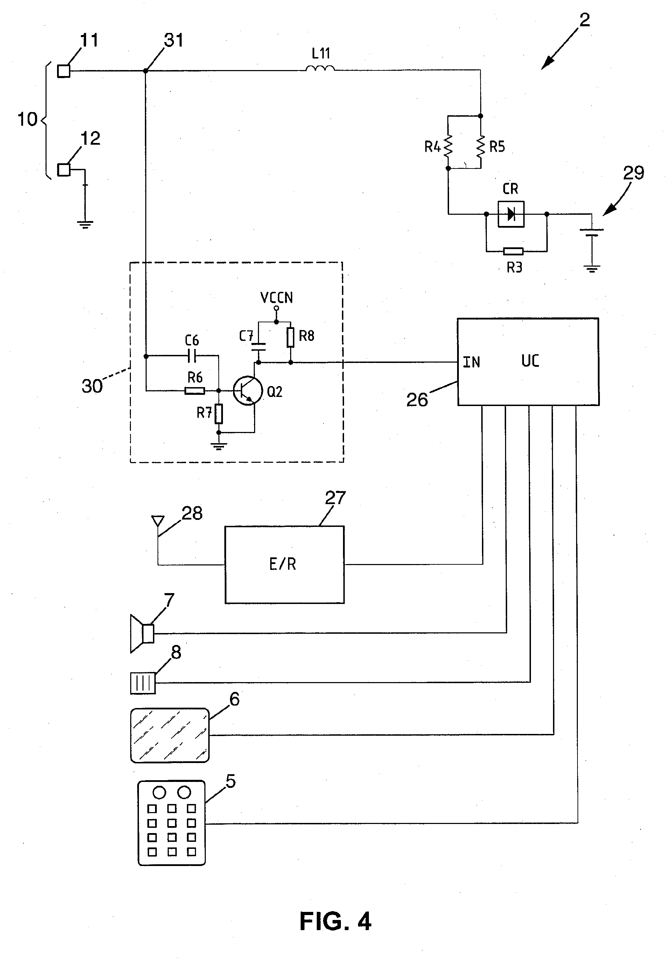

Par ailleurs, comme représenté sur la figure 4, le radiotéléphone 2 peut comporter une unité centrale électronique 26 (UC) telle qu'un microcontrôleur, reliée :
- à un circuit radio 27 d'émission et réception (E/R) lui-même relié à une ou plusieurs antennes 28,
- au clavier 5,
- au haut-parleur 7,
- et au microphone 8.

On notera que, bien que la figure 4 montre, par souci de simplicité, une liaison directe entre l'unité centrale 26 et respectivement le clavier 5, l'écran 6, le haut-parleur 7 et le microphone 8, ces différents éléments sont généralement reliés à l'unité centrale 26 par l'intermédiaire de circuits interfaces qui peuvent être le cas échéant intégrés à l'unité centrale 26 ou à certains de ces éléments.

L'ensemble du radiotéléphone 2 est alimenté par l'intermédiaire d'une batterie rechargeable 29, par exemple à une tension de l'ordre de 2,4 V (les liaisons d'alimentation entre cette batterie et les différents éléments du radiotéléphone n'ont toutefois pas été représentées sur la figure 4, par souci de clarté).

La borne positive de la batterie rechargeable 29 est reliée à la borne 11 de l'interface de recharge, par l'intermédiaire de résistances R4, R5, qui sont montées en série avec une diode CR ou tout autre dispositif électronique unidirectionnel autorisant uniquement un passage de courant dans un sens permettant de recharger la batterie 29.

Avantageusement, une inductance L11 ayant par exemple une valeur de l'ordre de 100 µH, peut être interposée entre la borne 11 de l'interface de recharge 10 et les résistances R4, R5, de façon à filtrer les impulsions électriques pouvant être générées sur la borne 11 (impulsions électrostatiques et/ou impulsions dues au signal codé généré par l'interface de sortie 21 de l'appareil d'entrée de données).

Une résistance de fuite R3 ayant par exemple une valeur de l'ordre de 1 kΩ est avantageusement connectée en parallèle de la diode CR, de façon à générer un courant de fuite de la borne positive de la batterie 29 vers la borne 20 de l'interface de sortie de l'appareil d'entrée de données 3, lorsque la borne 11 du radiotéléphone 2 est connectée à ladite borne 20 : cette résistance de fuite R3 permet donc d'alimenter le circuit électronique du dispositif d'entrée de données 3, comme indiqué précédemment, à une tension de l'ordre de 2,4 V dans l'exemple considéré.

Par ailleurs, le radiotéléphone 2 comporte un circuit détecteur 30, dont l'entrée est reliée à un noeud 31 situé entre la borne 11 et l'inductance L11 et dont la sortie est reliée à une entrée logique IN de l'unité centrale 26.

Le circuit détecteur 30 peut comprendre par exemple un transistor NPN Q2 dont la base est reliée au noeud 31 susmentionné par l'intermédiaire d'une résistance R6, dont l'émetteur est relié à la masse et dont le collecteur est relié à une source de tension VCCN par l'intermédiaire d'une résistance R8. La source de tension VCCN peut être fournie par exemple par le circuit d'alimentation du téléphone portable 2 (non représenté), cette source de tension pouvant être par exemple à un potentiel de 3 V.

Dans l'exemple particulier considéré ici, les résistances R6, R7 et R8 susmentionnées peuvent avoir des valeurs respectivement de l'ordre de 100 kΩ, 10 kΩ et 100 kΩ. De plus, des condensateurs C6, C7 peuvent avantageusement être connectés respectivement en parallèle des résistances R6 et R7 de façon à servir de filtre passe-haut. Dans l'exemple considéré, les condensateurs C6, C7 peuvent avoir des capacités respectivement de l'ordre de 100 nF et 1 nF.

Ces dispositions permettent classiquement de détecter la présence d'une source d'énergie électrique externe connectée aux bornes 11, 12 de l'interface d'alimentation 10, laquelle source d'énergie externe peut avantageusement être fournie par une base de radiocommunication fixe (non représentée). Cette source externe pouvant avoir par exemple une tension de l'ordre de 6V, les valeurs des résistances R6, R7 peuvent par exemple être prévues pour que le transistor Q2 devienne passant lorsque la borne 11 est à un potentiel continu supérieur à 4V : dans ce cas, l'entrée IN de l'unité centrale se trouve alors à 0 de façon continue, ce qui permet de détecter la présence de la source d'énergie externe.

En revanche, lorsque le radiotéléphone 2 n'est connecté à rien, ou lorsqu'il est connecté à l'appareil d'entrée de données 3 et que la sortie DOUT du microcontrôleur IC émet un signal bas, la borne 11 du radiotéléphone se trouve à une tension continue ou pseudo continue d'environ 2,4 V, qui, compte tenu de la valeur des résistances R6 et R7, se traduit par l'application d'une très faible tension à la base du transistor Q2, insuffisante pour le faire basculer à l'état passant.

Par ailleurs, lorsque la sortie DOUT du microcontrôleur IC de l'appareil d'entrée de données 3 génère un signal haut correspondant à une succession d'impulsions à la fréquence de 38 kHz, ce signal haut se traduit par une alternance de tensions nulles et de tensions de l'ordre de 2,4 V au niveau des bornes 20 et 11, comme expliqué précédemment. Cette alternance de tensions à la fréquence de 38 kHz n'est pas influencée par la présence de la batterie 29 et n'influence pas non plus cette batterie, car l'inductance L11 se comporte sensiblement comme un interrupteur ouvert à cette tension.

De plus, à chaque fois que le signal alterné passe par une valeur haute (environ 2,4 V dans l'exemple considéré) cette tension est transmise à la base du transistor Q2 grâce à la présence du condensateur C6 qui se comporte sensiblement comme un court-circuit à ladite fréquence, de sorte que le transistor Q2 est alors passant. En revanche, lorsque le signal alterné passe par une valeur sensiblement nulle, le transistor Q2 est non passant.

Lorsque la sortie DOUT du microcontrôleur IC émet un signal haut, ceci se traduit donc par une alternance d'états passants et non passants du transistor Q2, à la fréquence de 38 kHz.

Du fait de la présence du condensateur C7 qui filtre le signal, l'entrée IN de l'unité centrale 26 se trouve alors à un potentiel nul pendant toute la durée du signal haut en question, ce qui permet de repérer un tel signal haut.

Ainsi, tous les signaux émis par le microcontrôleur IC de l'appareil d'entré de données peuvent être reconnus par l'unité centrale 26 du radiotéléphone.

L'unité centrale 26 a par ailleurs en mémoire (dans une mémoire interne, ou le cas échéant dans une mémoire externe, non représentée) la correspondance entre les codes binaires émis par le microcontrôleur IC et les touches S11-S88 correspondant à ces codes, ce qui permet à l'unité centrale de reconstituer les informations entrées par l'utilisateur sur le clavier 15 de l'appareil d'entrée de données 3. Les informations ainsi communiquées à l'unité centrale 26 sont avantageusement au moins en partie affichées sur l'écran 6, comme expliqué précédemment.

Les informations en question peuvent par exemple permettre à un utilisateur de taper aisément des messages alphanumériques destinés à être ensuite émis par le radiotéléphone 2. Des messages alphanumériques de ce type sont prévus dans la plupart des protocoles de radiocommunication, y compris le protocole DECT susmentionnés (voir par exemple le document WO-A-97/10684 ou le document EP-A-0 895 433).

On notera par ailleurs que les informations entrées par l'utilisateur grâce à l'appareil d'entrée de données 3 pourraient également consister en des informations destinées à être mémorisées dans un répertoire téléphonique ou le cas échéant dans un agenda contenu dans une mémoire du radiotéléphone 2 (comme indiqué précédemment, cette mémoire peut être soit interne à l'unité centrale 26, soit constituée par une mémoire externe reliée à ladite unité centrale 26).

On notera également que l'appareil d'entrée de données pourrait constituer également la base fixe de radiocommunication qui communique avec le radiotéléphone 2, lorsqu'il s'agit d'un radiotéléphone fonctionnant sous un protocole de radiocommunication privée.

On notera enfin qu'au lieu de faire alimenter l'appareil d'entrée de données 3 par la batterie rechargeable 29 du radiotéléphone, l'appareil d'entrée de données 3 pourrait être relié au réseau et alimenter le radiotéléphone pour recharger sa batterie.

## Revendications

1. Dispositif comprenant un appareil électronique portable (2) et un appareil d'entrée de données (3) qui est adapté pour communiquer des informations audit appareil électronique portable,
**caractérisé en ce que** l'appareil électronique portable (2) comprend une unité centrale électronique (26), une batterie électrique rechargeable (29), une interface de recharge (10) adaptée pour se connecter à une source d'énergie externe pour recharger la batterie, et un circuit détecteur (30) relié à l'unité centrale et adapté pour détecter la présence de ladite source d'énergie électrique connectée à l'interface de recharge (10),
**en ce que** l'appareil d'entrée de données (3) comporte une interface de sortie (21) adaptée pour se connecter à l'interface de recharge (10) de l'appareil électrique portable, et un dispositif générateur de signaux codés (IC) adapté pour générer des signaux électriques codés représentatifs d'informations et pour transmettre ces signaux électriques codés à l'interface de sortie (21), lesquels signaux électriques codés sont reçus par l'interface de recharge (10) de l'appareil électronique portable lorsque ladite interface de recharge est connectée à l'interface de sortie (21) de l'appareil d'entrée de données,
**en ce que** le circuit détecteur (30) de l'appareil électronique portable est adapté pour capter lesdits signaux électriques codés,
et **en ce que** l'unité centrale (26) de l'appareil électronique portable et adaptée pour décoder les signaux électriques codés captés par le circuit détecteur (30) et recevoir ainsi les informations représentées par ces signaux électriques codés.

2. Dispositif selon la revendication 1, dans lequel le dispositif électronique portable (2) est un radiotéléphone.

3. Dispositif selon la revendication 1 ou la revendication 2, dans lequel l'appareil d'entrée de données (3) comprend une interface (3) permettant de recevoir lesdites informations d'un utilisateur, cette interface étant reliée au dispositif générateur de signaux codés (IC).

4. Dispositif selon l'une quelconque des revendications précédentes, dans lequel l'interface comprend un clavier (15).

5. Dispositif selon l'une quelconque des revendications précédentes, dans lequel les signaux électriques codés générés par le dispositif générateur de signaux codés (IC) sont modulés sur deux niveaux, le circuit détecteur (30) de l'appareil électronique portable étant adapté pour différencier ces deux niveaux.

6. Dispositif selon l'une quelconque des revendications précédentes, dans lequel les signaux électriques codés générés par le dispositif générateur de signaux codés IC sont des signaux obtenus par modulation en amplitude d'une porteuse périodique.

7. Dispositif selon la revendication 6, dans lequel la porteuse périodique a une fréquence supérieure à 1000 Hz.

8. Dispositif selon l'une quelconque des revendications précédentes, dans lequel l'appareil d'entrée de données (3) est alimenté électriquement par la batterie rechargeable (29) de l'appareil électronique portable, par l'intermédiaire de l'interface de sortie (21) dudit appareil d'entrée de données lorsque ladite interface de sortie est connecté à l'interface de recharge (10) de l'appareil électronique portable.

9. Dispositif selon la revendication 8, dans lequel l'interface de recharge de l'appareil électronique portable est reliée à la batterie électrique rechargeable par l'intermédiaire d'un dispositif électronique unidirectionnel (CR) autorisant uniquement un passage de courant dans un sens permettant de recharger la batterie (29), ce dispositif électronique unidirectionnel (CR) étant monté en parallèle avec au moins une résistance de fuite (R3) adaptée pour permettre à la batterie (29) d'alimenter l'appareil d'entrée de données (3).

10. Dispositif selon l'une quelconque des revendications précédentes, dans lequel l'appareil électronique portable (2) comprend un écran (6) commandé par l'unité centrale (26) dudit appareil électronique portable, l'unité centrale (26) étant adaptée pour faire afficher à l'écran au moins une partie des informations communiquées à l'appareil électronique portable (2) par l'appareil d'entrée de données (3) .

11. Dispositif selon la revendication 10, dans lequel l'appareil d'entrée de données (3) comprend un support (16) permettant de porter l'appareil électronique portable (2) dans une position adaptée pour qu'un utilisateur se servant de l'appareil d'entrée de données (3) puisse lire l'écran (6) de l'appareil électronique portable.

12. Dispositif selon la revendication 10 ou la revendication 11, dans lequel l'appareil électronique portable (2) comprend un clavier simplifié (5) et le support (16) de l'appareil d'entrée de données comprend au moins une paroi (18) adaptée pour masquer au moins partiellement le clavier (5) de l'appareil électronique portable lorsque ledit appareil électronique portable est engagé sur le support.

13. Dispositif selon l'une quelconque des revendications 10 à 12, dans lequel le support (16) de l'appareil d'entrée de données (3) comprend un logement (17) dans lequel s'insère l'appareil électronique portable, ledit appareil électronique portable étant un radiotéléphone comprenant un microphone (8) qui se trouve dans ledit logement (17) lorsque l'appareil électronique portable est inséré dans ledit logement, ledit microphone se trouvant alors en correspondance avec une ouverture (19) ménagée dans ledit support et adaptée pour permettre audit microphone (8) de recevoir des ondes sonores émises par un utilisateur.
